# EUROPÄISCHE PATENTSCHRIFT

(11) **EP 1 442 340 B1**
(45) Veröffentlichungstag und Bekanntmachung des Hinweises auf die Patenterteilung: **21.12.2005**
(21) Anmeldenummer: 02792584.1
(22) Anmeldetag: 21.10.2002
(51) Int. Cl.: G05B 23/02

(54) **BEREITSTELLUNG VON INFORMATIONEN IN EINEM AUTOMATISIERUNGSSYSTEM**
PROVISION OF INFORMATION IN AN AUTOMATION SYSTEM
CHARGEMENT DE DONNEES DANS UN SYSTEME D'AUTOMATISATION

(30) Priorität: 09.11.2001 DE 10155090
(43) Veröffentlichungstag der Anmeldung: 04.08.2004
(73) Patentinhaber: SIEMENS AKTIENGESELLSCHAFT, 80333 München (DE)
(72) Erfinder: SCHLERETH, Michael, D-91452 Wilhermsdorf (DE); WAGNER, Peter, D-91217 Hersbruck (DE)
(86) Internationale Anmeldenummer: PCT/DE2002/003970
(87) Internationale Veröffentlichungsnummer: WO 2003/040842

(56) Entgegenhaltungen:
- EP-A- 0 770 945
- EP-A- 1 045 302
- WO-A-01/57606
- DE-C- 19 742 448

## Beschreibung

Die Erfindung betrifft ein System zur Bereitstellung von Informationen in einem Automatisierungssystem nach dem Oberbegriff von Anspruch 1 und ein entsprechendes Verfahren nach dem Oberbegriff von Anspruch 8.

Ein derartiges Automatisierungssystem ist aus der WO 00/54118 bekannt.

Programmierbare Automatisierungssysteme, d. h. Systeme zur Steuerung und/oder Regelung von automatisierten Prozessen oder Anlagen, enthalten in der Regel ein so genanntes Runtime-System zur zeitlichen Ablaufsteuerung einer Automatisierungskomponente, einer Maschine oder eines Systems sowie ein so genanntes Engineeringsystem zum Erstellen und Editieren von Steuerungsprogrammen, welche zur Ausführung im Runtime-System vorgesehen sind. Üblicherweise sind viele das Automatisierungssystem kennzeichnenden Informationen (z. B. Bestandteile des Automatisierungssystems, technologische Zusammenhänge etc.) nur auf dem Engineeringsystem verfügbar oder nur über dieses abrufbar. Des Weiteren werden Informationen auf zentralen Servern abgelegt, welche die gesamte Informationsverarbeitung durchführen.

Aus der EP 1 045 302 A1 ist ein Automatisierungssystem bekannt, bei dem ein Webserver als interaktive Schnittstelle zu einem drahtlosen Kommunikationssystem dient, welches zu Management-, Steuerungs- und Diagnosezwecken dient.

Der Erfindung liegt die Aufgabe zugrunde, Informationen aus einem Engineeringsystem so bereitzustellen, dass ein skalierter Zugriff auf diese Informationen möglich wird.

Diese Aufgabe wird durch das in Anspruch 1 angegebene System bzw. das in Anspruch 8 angegebene Verfahren gelöst.

Mit dem erfindungsgemäßen System und Verfahren kann in einem Automatisierungssystem sukzessive skaliert auf Informationen, die aktuell benötigt werden, zugegriffen werden. Dabei ist die Informationshierarchie nicht linear, sondern stellt einen Informationsbaum dar, bei welchem im Sinne einer Automatisierungspyramide Informationen von mehreren Geräten - sich nach oben verjüngend - verdichtet werden. Die vorgeschlagene Lösung verbindet dieses Konzept der Informationshierarchie mit der Idee, wie diese Informationshierarchie definiert zu projektieren ist. Durch die Erfindung wird eine unnötige redundante Speicherung der Informationen verhindert und eine zentrale Datenhaltung ermöglicht, was zu einer erleichterten Datenpflege führt. Zudem wird eine leichte Erweiterbarkeit der Informationen sichergestellt, ohne dass ein manueller Eingriff auf einem zentralen Server nötig wäre. Das erfindungsgemäße System weist Standardschnittstellen auf, um mit den Zugriffsmitteln leicht auf die Informationen zugreifen zu können.

In einer vorteilhaften Ausgestaltung der Erfindung ist das Engineeringsystem zur Generierung von Inhalten der Projektierung und einer Konfiguration der Projektierung aus den Projektierungsinformationen, zur Übertragung der Inhalte und der Konfiguration der Projektierung in der Syntax einer Auszeichnungssprache, zur Zuordnung der Inhalte zu den Hierarchiestufen der Webserver und zur Speicherung der Inhalte in den jeweiligen Webservern vorgesehen. Die Projektierung der Speichermittel erfolgt somit automatisch durch das Engineeringsystem. Sowohl die Inhalte als auch die Konfiguration werden automatisch aus dem Engineeringsystem erzeugt. Bei einer Auszeichnungssprache (englisch: Markup Language) handelt es sich z. B. um eine Sprache, die mit Hilfe von SGML (Standard Generalized Markup Language) definiert wird. SGML ist als

ISO-Norm 8879 festgeschrieben. Auch das Internetformat HTML (Hypertext Markup Language) ist eine Auszeichnungssprache-Eine Auszeichnungssprache beschreibt die logischen Bestandteile eines Dokuments. Sie enthält beispielsweise Befehle zum Markieren typischer Elemente eines Dokuments, wie Überschriften, Textabsätze, Listen, Tabellen oder Grafikreferenzen.

Die Webserver sind in einer weiteren Ausgestaltung der Erfindung auf Rechnereinheiten installiert, wobei eine Skalierung der Webserver in Abhängigkeit einer Leistungsfähigkeit der jeweiligen Webserver vorgesehen ist und die Rechnereinheiten jeweils einen oder mehrere Webserver umfassen. Die vom Engineeringsystem erzeugten Informationen können so auf der Hierarchie von Webservern verteilt werden. Dabei ist die Anzahl und die jeweilige Mächtigkeit der Webserver in der Informationshierarchie entsprechend der Leistungsfähigkeit (Performance, Speicher, Zugriffswege/rechte) der jeweiligen CPU (Central Processing Unit) skalierbar. Durch die Anwendung dieser skalierbaren Hierarchie von Webservern können die Informationen durch das Engineeringsystem automatisch skaliert zur Verfügung gestellt werden. Ebenso ist ein Abzweig der Informationsströme auf unterer Ebene möglich, so dass z. B. Meldungen in parallelen Informationsströmen gleichzeitig an übergeordnete Ebenen der Steuerung und an einen externen Beobachter (Maschinenhersteller o. Ä.) weitergegeben werden.

In einer weiteren vorteilhaften Ausgestaltung der Erfindung beinhalten die Projektierungsinformationen des Engineeringsystems Systeminformationen des Automatisierungssystems und Projektdaten. Die Informationen der Engineeringsysteme sind in ihrer Projektdatenhaltung gespeichert. Die generierte Information für die Informationshierarchie, also die Webserver für den Runtime-Zugriff, ist auf den Webservern gespeichert, z. B. auf der Steuerung oder auf einem anlagenweiten Webserver oder PC, der die entsprechenden Dienste anbietet.

Durch die Möglichkeit, Meldungen aus einem Runtime-System automatisch Informationen der Informationshierarchie zuzuordnen, können in einer weiteren Ausgestaltung der Erfindung z. B. Alarmmeldungen mit erläuternden Meldetexten angereichert werden.

Den Vorteil eines einheitlichen Zugriffs auf die Informationen beruhend auf Internettechnologie bietet eine Speicherung der Informationen in XML-Formaten. Mit XML (Extensible Markup Language) wird eine standardisierte Sprache im Internetformat bezeichnet, welche eine Untermenge der weiter oben erwähnten Sprache SGML darstellt.

Die Zusammenführung von Informationen aller Ebenen eines Automatisierungssystems erreicht man durch Nutzung des Engineeringsystems zur Generierung der Informationen aus einem Manufacturing Execution System und/oder einem Enterprise Resource Planning System. Umgekehrt können das Manufacturing Execution System bzw. das Enterprise Resource Planning System auf einfache Art und Weise auf die Informationen aller Ebenen zugreifen, da diese im System in von allen beteiligten Partnern lesbaren Formaten vorliegen.

Nachfolgend wird die Erfindung anhand der in den Figuren dargestellten Ausführungsbeispiele näher beschrieben und erläutert.

Es zeigen:
- FIG 1: eine schematische Darstellung eines Systems zur Bereitstellung von Informationen in einem Automatisierungssystem,
- FIG 2: eine weitere Ausgestaltung eines Systems zur Bereitstellung von Informationen in einem Automatisierungssystem,
- FIG 3: eine schematische Darstellung einer XML-Processor-Pipeline und
- FIG 4: einen Überblick über die Struktur eines UMC-Systems.

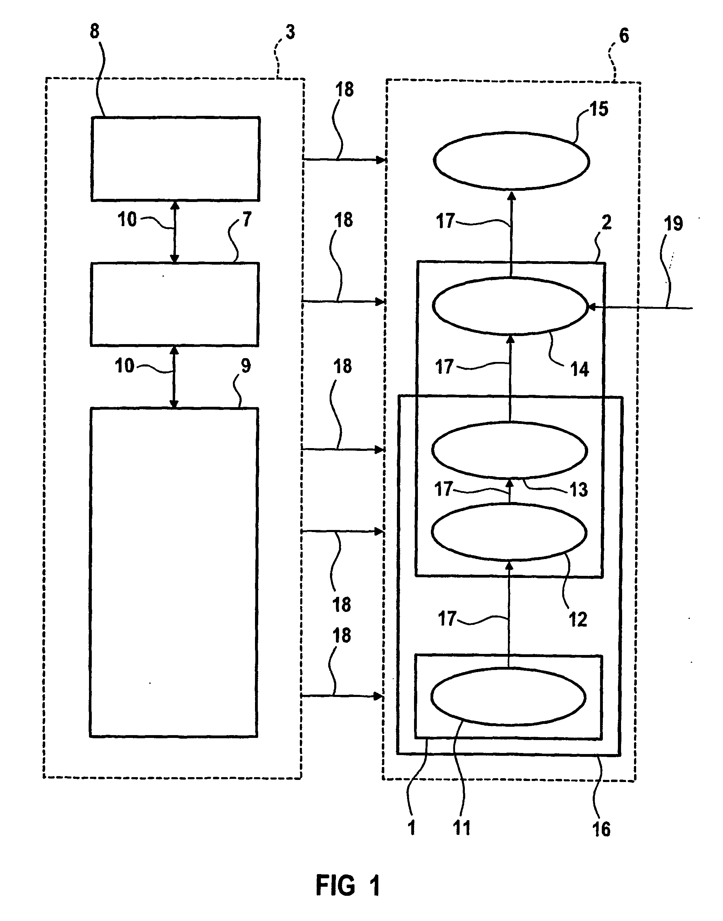

FIG 1 zeigt eine schematische Darstellung eines Systems zur Bereitstellung von Informationen in einem Automatisierungssystem. Das System enthält ein Engineeringsystem 3 und ein Runtime-System 6. Das Engineeringsystem 3 weist drei Ebenen auf: Eine Automatisierungsebene 9, ein Manufacturing Execution System 7 (abgekürzt MES) sowie eine Ebene des Enterprise Resource Planning 8 (abgekürzt ERP). Die drei Ebenen tauschen untereinander Daten 10 aus. Das Runtime-System 6 des Ausführungsbeispiels enthält drei Rechnereinheiten 1, 2, 16, welche Speichermittel 11 bis 15 aufweisen, die hier als Webserver ausgebildet sind. Die hierarchisch gegliederten Speichermittel 11 bis 15 enthalten Informationen, von denen die unterlagerten Ebenen den überlagerten Ebenen Teilinformationen 17 zur Verfügung stellen. Die Informationen auf den Speichermitteln 11 bis 15 des Runtime-Systems 6 werden aus Projektierungsinformationen des Engineeringsystems 3 generiert. Dieser Vorgang der Generierung von Informationen ist mit dem Bezugszeichen 18 gekennzeichnet und enthält die weiter unten erläuterten Mechanismen der XML-Processor-Pipeline, d. h. die Bereitstellung und Verarbeitung von Daten nach bestimmten (Prozessor-)Regeln als auch die Bereitstellung von Informationen in Formaten, die eine direkte Einbindung auf den Webservern erlauben (z. B. im HTML-Format).

Im Folgenden wird anhand FIG 1 die Erfindung in ihrer grundsätzlichen Idee erläutert. Die Erfindung betrifft ein System und Verfahren für den Zugriff auf Informationen in Automatisierungssystemen. Dieses System und Verfahren beruht auf Internet-Technologie, d. h. es werden Internet-Protokolle, Internet-Formate (HTML, XML) und Internet-Mechanismen wie z. B. Webserver und Webclient verwendet.
Ein übliches Engineeringsystem 3 eines Automatisierungssystems lässt sich grob in drei Ebenen gliedern. Die oberste Ebene bildet die ERP-Ebene 8, also die Unternehmensleit- oder Unternehmensplanungsebene. Darunter befindet sich die Betriebsleit- oder Produktionsplanungsebene, auch bezeichnet als MES-Ebene 7. Die unterste Ebene ist die Steuerungs-, Produktions- oder Automatisierungsebene 9. Die drei Ebenen des Engineeringsystems 3 tauschen Daten 10 untereinander aus, welche z. B. als XML-Daten ein einheitliches Format aufweisen, das von allen beteiligten Kommunikationspartnern verstanden wird. Entsprechend der hierarchischen Gliederung des Engineeringsystems 3 sind die Informationen 11 bis 15 im Runtime-System 6 in Hierarchiestufen abgebildet. Die Abbildung 18 der Informationen des Engineeringsystems 3 in die in den Speichermitteln 11 bis 15 gespeicherten Informationen im Runtime-System erfolgt automatisch. Die Idee der Erfindung besteht darin, das Projektieren dieser Informationshierarchie, d. h. der einzelnen hintereinander geschalteten Webserver, durch das Engineeringsystem zu unterstützen. Jede Hierarchiestufe der Informationshierarchie wird vom Engineeringsystem automatisch abgefüllt. Die Informationshierarchiestufe, die z. B. einen Text zu einer Meldenummer erhält, bekommt vom Engineeringsystem direkt mitgeteilt, wie anhand der Alarmnummer der Text zu finden ist. So entsteht eine Datenbasis in welcher den Alarmnummern entsprechende Texte zugeordnet sind. Der Webserver dieser Informationshierarchiestufe bietet an der Oberkante z. B. Informationen im HTML-Format an, die schon mit dem Text angereichert sind oder auch angereicherte XML-Formate. Typischerweise wird die MES-Funktionalität 7 auf einem getrennten Server, z. B. einem Leitrechner, realisiert. Dieser Leitrechner kann direkt auf die unterlagerten Ebenen der Informationshierarchie zugreifen, um sich entsprechend Informationen aus der Control-Ebene 9 zu holen. Es ist möglich zur Laufzeit das Engineeringsystem 3 abzukoppeln, da alle Daten die benötigt werden in der Informationshierarchie vorhanden sind. Bei bisher üblichen Systemen zur Bereitstellung von Informationen in einem Automatisierungssystem werden Webserver zur Verfügung gestellt, welche jeweils eine bestimmte Funktionalität anbieten. Die Projektierung dieser Webserver wird nicht durch das Engineeringsystem unterstützt, sondern erfordert jeweils den Eingriff eines Programmierers, welcher die entsprechenden Informationen auf dem jeweiligen Server selbst zusammenstellen muss.

Im Ausführungsbeispiel wird im Runtime-System 6 ein Alarm generiert. Dieser Alarm liegt anfangs nur in Form einer binären Alarmnummer im Speichermittel 11 vor und bildet damit die unterste Stufe der Informationshierarchie. Bei dem hier vorgeschlagenen System wird diese Information, damit auf sie sinnvoll zugegriffen werden kann, mit Internet-Technologien, z. B. in XML, zur Verfügung gestellt, d. h. die Rohdaten-Alarmnummer wird als XML zur Verfügung gestellt. Aufbauend auf dieser Basisinformation wird eine Informationshierarchie aufgebaut, welche abgebildet wird in einer Hierarchie von Webservern. Das System stellt nun automatisch die binäre Alarmnummer im XML-Format zur Verfügung. Im nächsten Schritt wird diese Information 17 an die nächsthöhere Stufe im Speichermittel 12 weitergegeben. In der nächsten Stufe der Informationshierarchie im Speichermittel 12 wird die Information angereichert mit einem der jeweiligen Alarmnummer zugeordneten Alarmtext, z. B. "Endschalter erreicht". Weitere vorstellbare Hierarchiestufen (Speichermittel 13 und 14) werden z. B. einen Hilfetext zum jeweiligen Alarm bzw. einen Link 19 zum Maschinenhersteller zur Verfügung stellen. Ebenso denkbar ist es, aus dieser Alarmnummer eine Information in einer Alarmübersicht zu generieren (Speichermittel 15), z. B. eine Aussage, ob die Anlage wegen dieses Alarms schon gestört ist oder ob sie trotz des Alarms weiterläuft. Die Hierarchie von Informationen wird somit je Stufe in eigenen ebenfalls hierarchisch strukturierten Webservern zugänglich gemacht, wobei sich die überlagerten Webserver der unterlagerten Webserver, also der unterlagerten Hierarchiestufen bedienen, um die Informationen zu bekommen. Dabei kann auf einem physikalischen Gerät, z. B. einer Rechnereinheit 1, 2, 16, genau ein Webserver oder auch eine Mehrzahl an Webservern installiert sein. Beliebige Ausschnitte der Hierarchie lassen sich somit auf jeweils einem Gerät zusammenfassen. Das System ist sehr gut skalierbar. Im Minimalfall ist auf der Steuerung nur ein Web Server realisiert, der die Alarmnummer als Information in XML übergibt. Auf einem PC-Server sind.die weiteren Hierarchiestufen dieser Informationshierarchie auch wieder in Form von hintereinander geschalteten Web Servern realisiert. Es ist also möglich, an der Steuerung nur die Alarmnummer, aber auch die kompletten Texte mit Hilfe-Informationen zur Verfügung stellen. Diese Hierarchie kann sich bis ganz in die Spitze der Automatisierungspyramide fortsetzen. Es besteht die Möglichkeit, quer in diese Hierarchie einzusteigen, d. h. beispielsweise auf die Rohdaten zuzugreifen, um diese dann weiter zu verarbeiten. Die Zusammenfassung mehrerer Hierarchiestufen in einem Webserver durch Zusammenfassen der Prozessorfunktionen ist ebenfalls möglich.

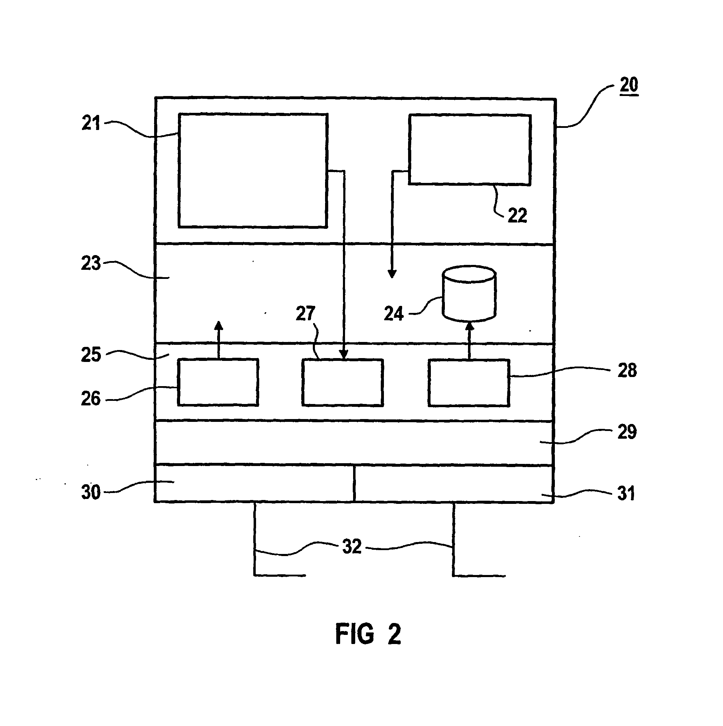

FIG 2 zeigt eine Ausgestaltung des Systems zur Bereitstellung von Informationen in einem Universal Motion Control System 20 (abgekürzt UMC-System). Das UMC-System 20 ermöglicht einen ortsunabhängigen Zugriff auf Automatisierungsgeräte. Das Runtime-System 23, welches die PLC-Funktionalität (Abkürzung für Programmable Logic Controller) realisiert, wird gesteuert durch Anwenderprogramme 21 und Technologiepakete 22. Das Runtime-System 23 enthält außerdem Speichermittel in Form von Filesystemen 24, welche die Projektierungsdaten aus dem Engineeringsystem enthalten. Auf das Runtime-System 23 und das Anwenderprogramm 21 wird mit verschiedenen internetbasierten Zugriffsmitteln 25 zugegriffen. Im Einzelnen sind das HTTP-Server 26 (Hypertext Transfer Protocol), SMTP-Server 27 (Simple Mail Transfer Protocol) und FTP-Server 28 (File Transport Protocol). Unterlagert ist eine Kommunikationsschicht 29, basierend auf TCP (Transmission Control Protocol). Der Übergang zur Hardware erfolgt z. B. über Profibus 30 oder Ethernet 31, jeweils mit Verbindungen 32 zur Peripherie.

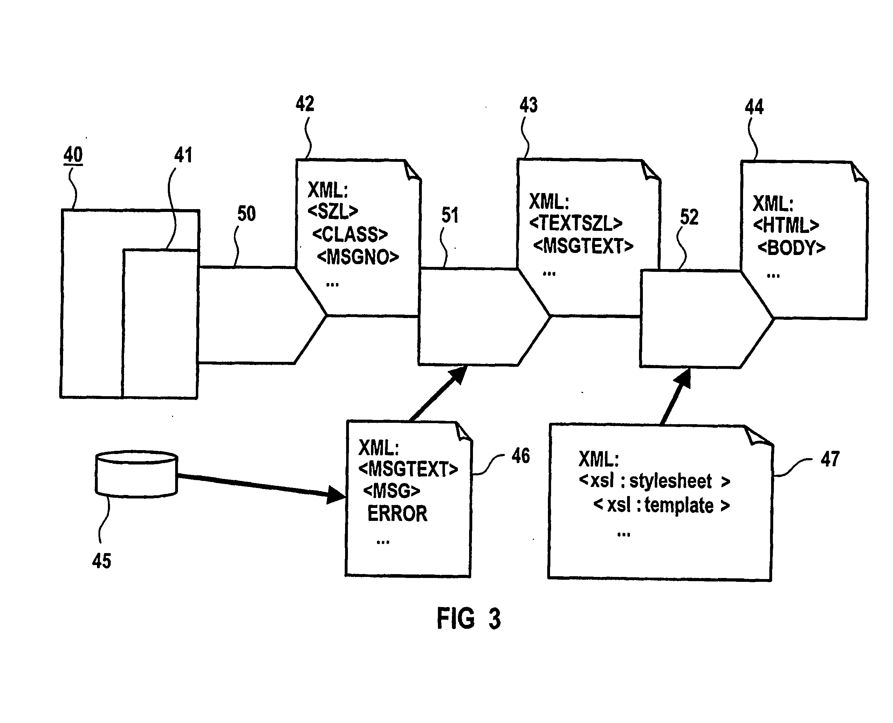

FIG 3 zeigt eine sogenannte XML-Processor-Pipeline, d. h. die sukzessive Bearbeitung von Daten mit sogenannten XML-Prozessoren, welche auf den Webservern laufen. Programme, welche XML-Dokumente einlesen wollen brauchen ein Verarbeitungsmodul, auch XML-Prozessor genannt. Der XML-Prozessor ist dafür verantwortlich, dass der Inhalt des XML-Dokuments in einer geeigneten Datenstruktur einer verarbeitenden Anwendung zur Verfügung gestellt wird. Dabei vereint der XML-Prozessor die Funktionen Umsetzung und Übermittlung, d. h. er dient auch als Transmitter zur Übertragung von Server zu Server. Im in FIG 3 gezeigten Ausführungsbeispiel der Aufbereitung eines Diagnosetextes enthält ein UMC-Runtime-System 40 eine System-Zustands-Liste 41, welche binäre Daten enthält. Eine solche System-Zustands-Liste ist z. B. ein Diagnosepuffer, welcher Alarmnummern enthält. Ein erster XML-Prozessor 50 überträgt den Inhalt und die Struktur der System-Zustand-Liste 41 in das Dokument 42 im XML-Format. Mit einem zweiten XML-Prozessor 51 wird das Dokument 42 mit weiteren Daten 46 im XML-Format, welche aus einer Datenbank 45 stammen, verknüpft und als Ergebnis der Verknüpfung ein neues mit Informationen angereichertes Dokument 43 erzeugt. Im Beispielsfall wird einer Alarmnummer im XML-Dokument 42 durch den zweiten XML-Prozessor ein Meldetext, ebenfalls im XML-Format, aus den Daten 46 zugeordnet. Ein dritter XML-Prozessor 52 verknüpft schließlich das so angereicherte Dokument 43 mit Formatierungsinformationen 47 und erzeugt ein XML-Dokument 44, welches die enthaltenen Informationen im HTML-Format darstellt. Dazu bedient sich der dritte XML-Prozessor 52 der Formatierungsinformationen 47, welche als XSL-Daten vorliegen. XSL (Extensible Stylesheet Language) ist eine erweiterte Auszeichnungssprache zur Beschreibung von sogenannten Stylesheets. Damit lässt sich z. B. auf einfache Weise eine Sprachumschaltung realisieren, indem ein XML-Prozessor mit Hilfe von XSL-Daten eine Eins-zu-eins-Umsetzung beispielsweise von Deutsch in Englisch ausführt. Auch eine Umsetzung der generierten Alarmmeldungen durch einen entsprechenden XML-Prozessor in E-Mail, Dateien, Fax usw. zur Benachrichtigung eines Anwenders wird möglich. Bei einem bestimmten Projektstand werden somit XML- oder XSL-Daten generiert, die dann der Webserver der entsprechenden Hierarchiestufe verwendet, um die Information zu verdichten. Konsistenz ist dadurch gegeben, dass direkt aus den in der Datenbank 45 vorhandenen Engineeringdaten eine Server-Projektierung erzeugt wird. Die Server-Projektierung muss nicht per Hand angepasst werden.

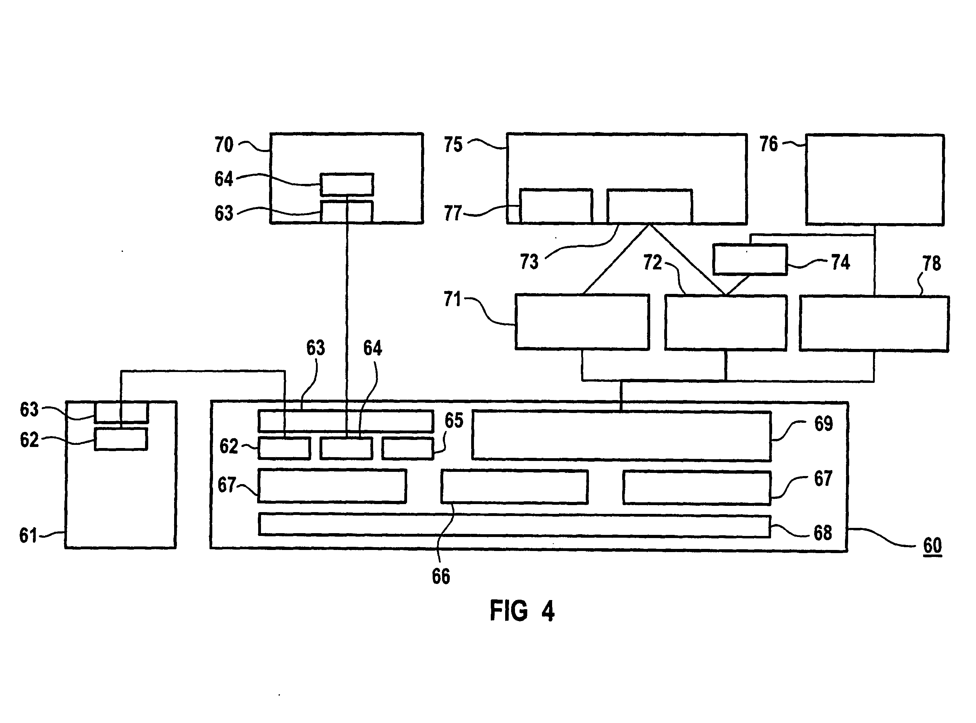

Die typische Struktur eines UMC-Systems zeigt FIG 4. Das Runtime-System des UMC-Systems ist in den mit den Bezugszeichen 60 bzw. 61 gekennzeichneten Blöcken realisiert. Das Runtime-System im Beispiel ist eine Steuerung für eine Produktionsmaschine. Die beiden Blöcke 60, 61 der Steuerung sind über TCP/IP-Schnittstellen 63 (Transmission Control Protocol/Internet Protocol) und RPC-Module 62 (Remote Procedure Calling) miteinander verbunden. Ein externer Webbrowser 70 kommuniziert mittels HTTP 64 über eine TCP/IP-Schnittstelle 63 mit einem Webserver 67 der Steuerung bzw. des Runtime-Systems 60. Über die TCP/IP-Schnittstelle 63 des Runtime-Systems 60 können des Weiteren Daten im FTP-Format 65 übertragen werden. Neben dem Web-Server 62 weist die Steuerung einen Datenserver 66 und weitere Server 67 auf. Die Steuerung läuft mit einem Echtzeit-Betriebssystem 68, auch Numeric Robotic Kernel (NRK) genannt. Mittels eines Übertragungsprotokolls 69 (z. B. dem S7-Protokoll der Firma Siemens AG) kommuniziert das Runtime-System 60 mit Komponenten 71 bis 78 eines Engineeringsystems. Das Engineeringsystem wird auch als Scout bezeichnet. Es enthält eine erste Datenbank 71 mit Informationen zu Hardware-Konfigurationen und eine zweite Datenbank 72 mit technologischen Informationen. Das Engineeringsystem wird mittels einer Bedienoberfläche 75 bedient, welche eine erste Schnittstelle 77 für den Austausch von XML-Daten und eine zweite Schnittstelle 73 zu den Datenbanken 71, 72 aufweist. Über eine Object Manager genannte Schnittstelle 74 ist ein Tool 76 für das Engineering von Mensch-Maschinen-Schnittstellen angebunden. Ein weiteres Tool 78 dient der Projektierung der Mensch-Maschinen-Schnittstellen des Runtime-Systems.

Zusammenfassend betrifft die Erfindung somit ein System und Verfahren zur Bereitstellung von Informationen in einem Automatisierungssystem, welches einen skalierten Zugriff auf diese Informationen möglich macht. Das System enthält Speichermittel 11..15 zur Speicherung von Informationen in Form einer Informationshierarchie, wobei die Speichermittel 11..15 Hierarchiestufen bilden und wobei zum Anreichern der Informationen erste Speichermittel 1 unterlagerter Hierarchiestufen zur Bereitstellung der Informationen an zweite Speichermittel 2 überlagerter Hierarchiestufen vorgesehen sind, ein Engineeringsystem 3 zur Generierung der Informationen aus Projektierungsinformationen des Automatisierungssystems und zur automatischen Projektierung der Speichermittel 11..15 und Zugriffsmittel 25 zum Zugriff auf die gespeicherten Informationen.

## Patentansprüche

1. System zur Bereitstellung von Informationen in einem Automatisierungssystem mit einem Projektierungsinformationen des Automatisierungssystems enthaltenden Engineeringsystem (3), **dadurch gekennzeichnet,**
**dass** eine Hierarchie von Webservern (11...15) zur Speicherung der Informationen vorgesehen ist,
**dass** internetbasierte Zugriffsmittel (25) zum Zugriff auf die gespeicherten Informationen vorgesehen sind,
**dass** das Engineeringsystem (3) dazu ausgebildet ist, aufgrund der Projektierungsinformationen die webserver (11...15) derart zu projektieren, dass die Informationen in Form einer Informationshierarchie auf der Hierarchie der Webserver (11...15) abgebildet sind, und
**dass** die Webserver (11...15) unterschiedlicher Hierarchiestufen derart hintereinander geschaltet sind, dass ihnen zur Anreicherung der in ihnen gespeicherten Informationen die in den jeweils unterlagerten Hierarchiestufen gespeicherten Informationen zur Verfügung stehen.

2. System nach Anspruch 1,
**dadurch gekennzeichnet,**
**dass** das Engineeringsystem (3) zur Generierung von Inhalten und einer Konfiguration der Projektierung aus den Projektierungsinformationen, zur Übertragung der Inhalte und der Konfiguration der Projektierung in der Syntax einer Auszeichnungssprache, zur Zuordnung der Inhalte zu den Hierarchiestufen der Webserver (11..15) und zur Speicherung der Inhalte in den jeweiligen Webservern (11..15) vorgesehen ist.

3. System nach Anspruch 1 oder 2,
**dadurch gekennzeichnet,**
**dass** die webserver (11..15) auf Rechnereinheiten (1, 2, 16) installiert sind, wobei eine Skalierung der Webserver (11...15) in Abhängigkeit von der Leistungsfähigkeit der jeweiligen Webserver (11...15) vorgesehen ist und die Rechnereinheiten (1, 2, 16) jeweils einen oder mehrere Webserver (11...15) umfassen.

4. System nach einem der vorhergehenden Ansprüche,
**dadurch gekennzeichnet,**
**dass** die Projektierungsinformationen Systeminformationen des Automatisierungssystems und Projektdaten beinhalten.

5. System nach einem der vorhergehenden Ansprüche,
**dadurch gekennzeichnet,**
**dass** das System zur automatischen Zuordnung von Informationen der Informationshierarchie zu Daten, insbesondere zu Meldungen, aus einem Runtime-System (6) vorgesehen ist.

6. System nach einem der vorhergehenden Ansprüche,
**dadurch gekennzeichnet,**
**dass** eine Speicherung der Informationen in XML-Formaten vorgesehen ist.

7. System nach einem der vorhergehenden Ansprüche,
**dadurch gekennzeichnet,**
**dass** das Engineeringsystem (3) zur Generierung der Informationen aus einem Manufacturing Execution System (7) und/oder einem Enterprise Resource Planning System (8) vorgesehen ist.

8. Verfahren zur Bereitstellung von Informationen in einem Automatisierungssystem mit einem Projektierungsinformationen des Automatisierungssystems enthaltenden Engineeringsystem (3), **dadurch gekennzeichnet,**
**dass** die Informationen in einer Hierarchie von Webservern (11...15) gespeichert werden und
**dass** mittels internetbasierter Zugriffsmittel (25) auf die gespeicherten Informationen zugegriffen wird,
wobei das Engineeringsystem (3) aufgrund der Projektierungsinformationen die Webserver (11...15) derart projektiert, dass die Informationen in Form einer Informationshierarchie auf der Hierarchie der Webserver (11...15) abgebildet sind, und
wobei die Webserver (11...15) unterschiedlicher Hierarchienstufen derart hintereinander geschaltet werden, dass ihnen zur Anreicherung der in ihnen gespeicherten Informationen die in den jeweils unterlagerten Hierarchiestufen gespeicherten Informationen zur Verfügung stehen.

9. Verfahren nach Anspruch 8,
**dadurch gekennzeichnet,**
**dass** das Engineeringsystem (3) Inhalte und eine Konfiguration der Projektierung aus den Projektierungsinformationen generiert, die Inhalte und die Konfiguration der Projektierung in der Syntax einer Auszeichnungssprache überträgt, die Inhalte den Hierarchiestufen der Webserver (11..15) zuordnet und die Inhalte in den jeweiligen Webservern (11..15) speichert.

10. Verfahren nach Anspruch 8 oder 9,
**dadurch gekennzeichnet,**
**dass** die Webserver (11..15) auf Rechnereinheiten (1, 2, 16) installiert sind, wobei die Webserver (11...15) in Abhängigkeit einer Leistungsfähigkeit der jeweiligen Webserver (11...15) skaliert werden und die Rechnereinheiten (1, 2, 16) jeweils einen oder mehrere Webserver (11...15) umfassen.

11. Verfahren nach einem der Ansprüche 8 bis 10,
**dadurch gekennzeichnet,**
**dass** die Projektierungsinformationen Systeminformationen des Automatisierungssystems und Projektdaten beinhalten.

12. Verfahren nach einem der Ansprüche 8 bis 11,
**dadurch gekennzeichnet,**
**dass** Informationen der Informationshierarchie zu Meldungen aus einem Runtime-System (6) automatisch zugeordnet werden.

13. Verfahren nach einem der Ansprüche 8 bis 12,
**dadurch gekennzeichnet,**
**dass** die Informationen in XML-Formaten gespeichert werden.

14. Verfahren nach einem der Ansprüche 8 bis 13,
**dadurch gekennzeichnet,**
**dass** das Engineeringsystem (3) die Informationen aus einem Manufacturing Execution System (7) und/oder einem Enterprise Resource Planning System (8) generiert.

## Claims

1. System for providing information in an automation system with an engineering system containing project-planning information of the automation system (3), **characterised in that**, a hierarchy of web servers (11...15) is provided for storing the information, that the internet based access means (25) are provided for access to the stored information, that the engineering system (3) is additionally configured to project plan the web server (11,,,15) such that on the basis of the project-planning information the information is designed in the form of an information hierarchy on the hierarchy of the web server (11...15) and that the web server (11...15) is switched with different hierarchical stages one after the other such that the information stored in the respectively documented hierarchical stages is available to enrich the information stored therein.

2. System in accordance with claim 1,
**characterised in that**,
the engineering system (3) is provided for generation of contents and a configuration of the project planning from the project planning information, for transmission of the contents and the configuration of the project planning in the syntax of a markup language, to assign the contents to the hierarchical stages of the web server (11..15) and to store the contents in the relevant web server (11..15).

3. System in accordance with claim 1 or 2,
**characterised in that**,
the web servers (11...15) are installed on processing units (1, 2, 16), where a scaling of the web servers (11...15) is provided depending on the power of the relevant web server (11...15) and the processing units (1, 2, 16) each comprise one or more web servers (11...15).

4. System in accordance with one of the preceding claims,
**characterised in that**,
the project planning information contains system information of the automation system and project data.

5. System in accordance with one of the preceding claims,
**characterised in that**,
the system is provided for automatically assigning information of the information hierarchy to data, especially to messages, from a runtime system (6).

6. System in accordance with one of the preceding claims,
**characterised in that**,
there is provision for the information to be stored in XML formats.

7. System in accordance with one of the preceding claims,
**characterised in that**,
the engineering system (3) is provided for generating the information from a Manufacturing Execution System (7) and/or an Enterprise Resource Planning System (8).

8. Method for provision of and access to information in an automation system with an engineering system (3) containing a project planning information of the automation system
**characterised in that**
information is stored in a hierarchy of web servers (11..15), and access to the stored information is gained by means of internet-based access means (25) with which the engineering system project plans the web server (11...15) such that as a result of the project planning information, the information is formed in the form of an information hierarchy on the hierarchy of the web server (11...15), and
with which the web servers (11...15) of different hierarchical stages are series connected such that the information stored in the respectively documented hierarchical stages is available to enrich the information stored therein.

9. Method in accordance with claim 8,
**characterised in that**,
the engineering system (3) generates contents and a configuration of the project planning from the project planning information, transfers the contents and the configuration of the project planning in the syntax of a markup language, assigns the contents to the hierarchical stages of the storage means (11..15) and stores the contents in the relevant storage means (11..15).

10. Method in accordance with claim 8 or 9,
**characterised in that**,
Web servers (11...15) are installed on processing units (1, 2, 16), where the web server (11...15) scaling depends on the power of the relevant web server (11...15) and the processing units (1, 2, 16) each comprise one or more web servers (11...15).

11. Method in accordance with one of the claims 8 to 10,
**characterised in that**,
the project planning information contains system information of the automation system and project data.

12. Method in accordance with one of the claims 8 to 11,
**characterised in that**,
information of the information hierarchy is automatically assigned to messages from a runtime system (6).

13. Method in accordance with one of the claims 8 to 12,
**characterised in that**,
the information is stored in XML formats.

14. Method in accordance with one of the claims 8 to 13,
**characterised in that**
the engineering system (3) generates the information from a Manufacturing Execution System (7) and/or an Enterprise Resource Planning System (8).

## Revendications

1. Système de mise à disposition d'informations dans un système d'automatisation comprenant un système d'engineering (3) renfermant des informations de planification du système d'automatisation,
**caractérisé**
**en ce qu'**il est prévu une hiérarchie de serveurs Web (11...15) pour la mémorisation des informations,
**en ce que** sont prévus des moyens d'accès (25) basés sur Internet pour l'accès aux informations mémorisées,
**en ce que** le système d'engineering (3) est conçu de façon à planifier les serveurs Web (11...15) sur la base des informations de planification, de façon telle que les informations soient reproduites sous la forme d'une hiérarchie d'informations sur la hiérarchie des serveurs Web (11...15), et en ce que les serveurs Web (11...15) de différents échelons de hiérarchie sont commutés les uns à la suite des autres de manière à disposer, pour enrichir les informations qui y sont mémorisées, des informations mémorisées dans les échelons de hiérarchie respectivement sous-jacents.

2. Système selon la revendication 1,
**caractérisé**
**en ce que** le système d'engineering (3) est prévu pour générer des contenus et une configuration de la planification à partir des informations de planification, pour transmettre les contenus et la configuration de la planification dans la syntaxe d'un langage de transcription, pour affecter les contenus aux échelons de hiérarchie des serveurs Web (11...15), et pour mémoriser les contenus dans les serveurs Web (11 ... 15) respectifs.

3. Système selon la revendication 1 ou 2,
**caractérisé**
**en ce que** les serveurs Web (11...15) sont installés sur des unités de calculateur (1, 2, 16), un cadrage des serveurs Web (11...15) étant prévu en fonction de la capacité de puissance des serveurs Web (11...15) respectifs, et les unités de calculateur (1, 2, 16) englobant respectivement un ou plusieurs serveurs Web (11...15).

4. Système selon l'une des revendications précédentes,
**caractérisé**
**en ce que** les informations de planification contiennent des informations système du système d'automatisation et des données de planification.

5. Système selon l'une des revendications précédentes,
**caractérisé**
**en ce que** le système est prévu pour l'affectation automatique d'informations de la hiérarchie d'informations à des données, notamment à des messages, provenant d'un système ou support d'exécution dit runtime-system (6).

6. Système selon l'une des revendications précédentes,
**caractérisé**
**en ce qu'**il est prévu une mémorisation des informations dans des formats XML.

7. Système selon l'une des revendications précédentes,
**caractérisé**
**en ce que** le système d'engineering (3) est prévu pour générer les informations provenant d'un système dit Manufacturing Execution System (7) et/ou d'un système dit Enterprise Resource Planning System (8).

8. Procédé pour la mise à disposition d'informations dans un système d'automatisation comprenant un système d'engineering (3) renfermant des informations de planification du système d'automatisation,
**caractérisé**
**en ce que** les informations sont mémorisées dans une hiérarchie de serveurs Web (11...15), et
**en ce que** l'on accède aux informations mémorisées, à l'aide de moyens d'accès (25) basés sur Internet,
le système d'engineering (3) planifiant les serveurs Web (11...15) sur la base des informations de planification, de façon telle que les informations soient reproduites sous la forme d'une hiérarchie d'informations sur la hiérarchie des serveurs Web (11...15), et
les serveurs Web (11...15) de différents échelons de hiérarchie étant commutés les uns à la suite des autres de manière à disposer, pour enrichir les informations qui y sont mémorisées, des informations mémorisées dans les échelons de hiérarchie respectivement sous-jacents.

9. Procédé selon la revendication 8,
**caractérisé**
**en ce que** le système d'engineering (3) génère des contenus et une configuration de la planification à partir des informations de planification, transmet les contenus et la configuration de la planification dans la syntaxe d'un langage de transcription, affecte les contenus aux échelons de hiérarchie des serveurs Web (11...15), et mémorise les contenus dans les serveurs Web (11...15) respectifs.

10. Procédé selon la revendication 8 ou 9,
**caractérisé**
**en ce que** les serveurs Web (11...15) sont installés sur des unités de calculateur (1, 2, 16), les serveurs Web (11...15) étant cadrés en fonction de la capacité de puissance des serveurs Web (11...15) respectifs, et les unités de calculateur (1, 2, 16) englobant respectivement un ou plusieurs serveurs Web (11...15).

11. Procédé selon l'une des revendications 8 à 10,
**caractérisé**
**en ce que** les informations de planification contiennent des informations système du système d'automatisation et des données de planification.

12. Procédé selon l'une des revendications 8 à 11,
**caractérisé**
**en ce que** des informations de la hiérarchie d'informations sont affectées automatiquement à des messages d'un système ou support d'exécution dit runtime-system (6).

13. Procédé selon l'une des revendications 8 à 12,
**caractérisé**
**en ce que** les informations sont mémorisées dans des formats XML.

14. Procédé selon l'une des revendications 8 à 13,
**caractérisé**
**en ce que** le système d'engineering (3) génère les informations provenant d'un système dit Manufacturing Execution System (7) et/ou d'un système dit Enterprise Resource Planning System (8).
